## Europäisches Patentamt

## European Patent Office

## Office européen des brevets

(11) Publication number: **0 118 074**
**B1**

# EUROPEAN PATENT SPECIFICATION

(45) Date of publication of patent specification: **10.06.87**

(21) Application number: **84101763.5**

(22) Date of filing: **20.02.84**

(51) Int. Cl.⁴: **H 02 P 7/00,** E 05 F 15/00, H 02 H 7/08

(54) A safety circuit for the electrical control of a motor vehicle electric window actuator unit.

(30) Priority: **03.03.83 IT 6724483**

(43) Date of publication of application:
**12.09.84 Bulletin 84/37**

(45) Publication of the grant of the patent:
**10.06.87 Bulletin 87/24**

(84) Designated Contracting States:
**DE FR GB SE**

(56) References cited:
**EP-A-0 057 338**
**DE-A-3 048 989**
**FR-A-2 400 787**
**FR-A-2 525 270**
**GB-A-2 013 428**
**GB-A-2 053 513**
**US-A-3 513 374**
**US-A-3 581 174**
**US-A-3 617 835**

(73) Proprietor: **FIAT AUTO S.p.A.**
**Corso Giovanni Agnelli 200**
**I-10135 Torino (IT)**

(72) Inventor: **Fantacchiotti, Massimo**
**Corso Sommeiller, 33**
**I-10100 Torino (IT)**
Inventor: **Peres, Gianpiero**
**Via Monforte, 9**
**I-10100 Torino (IT)**

(74) Representative: **Prato, Roberto et al**
**c/o Ingg. Carlo e Mario Torta Via Viotti 9**
**I-10121 Torino (IT)**

Courier Press, Leamington Spa, England.

## Description

The present invention relates to a safety circuit for the electrical control of a window actuator unit on a motor vehicle. As is known, such electrical window actuator units are generally constituted by a dc electric motor which can be supplied from the battery of the vehicle, and by a double pole switch for controlling the closing and opening movements of the window. The movement of the window can be stopped by the user acting on the switch.

Already known are safety circuits which stop the closing movement of the window in the event of a force being applied against the movement of the window itself greater than a predetermined limit value, such as, for example, can happen in the event that a part of a person or a child remains trapped by the window itself, and then automatically causes the said window to descend to open and allow the immediate freeing of such a part.

For example, the document GB—A—2 013 428 discloses circuits for electric window winders for a vehicle, where the current through the motor is sensed by a low-value resistor; the potential drop is monitored by a current sensor circuit, which provides an input signal to the control circuit on a line, when the motor is drawing an abnormally high current. The control circuit is arranged, when an abnormally high current is detected (that may be due to the window being jammed), to reverse the energization of the motor.

The document US—A—3 513 374 discloses a car window safety circuit comprising a temperature compensated threshold circuit and a timer circuit in order to reverse the movement of the motor, when the window meets an obstruction.

Moreover, from the said GB—A—2 013 428 it is known a method, where it is arranged to automatically close all the windows of a vehicle, when the ignition key is released.

The object of the present invention is to provide a safety circuit of the above mentioned type, in combination with timer control circuits which also allow the window actuator to be operated within a predetermined time after the key has been removed from an operative position in the associated ignition switch of the vehicle, to provide for a safety operation of the window actuator unit also in such a particular condition of operation, that is when the key has been removed from the ignition switch.

According to the present invention there is provided a safety circuit for the electrical control of a motor vehicle window actuator unit including means operable to detect the value of the current consumed by the said window actuator unit, and to reverse the sense of operation of the said unit for values of the said current greater than a predetermined limit, the said means including a resistor connected in series with the electrical supply circuit for the said window actuator unit, the voltage across the terminals of the said resistor being applied to second means, to provide a first signal for values of the said current greater than the predetermined limit, third means connected to receive the said first signal and operable to provide a control signal for reversing the sense of operation of the said unit, characterized by the fact that it includes timer means for supplying the said actuator unit for a predetermined period of time after a key has been removed from an operative position in an associated ignition switch of the vehicle.

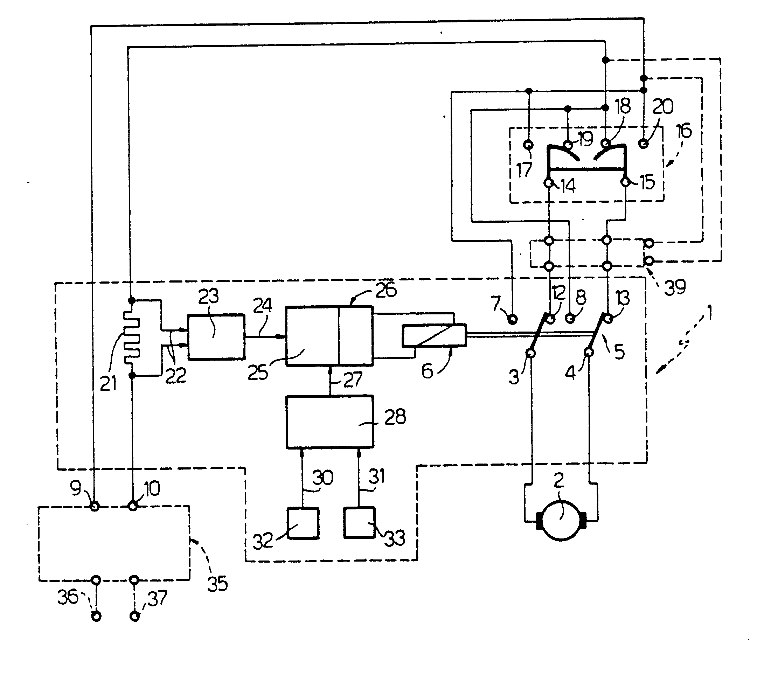

For a better understanding of the present invention a particular embodiment will now be described, by way of a non-limitative example, with reference to the attached drawing which shows an electrical and block schematic diagram thereof.

With reference to this drawing, the reference numeral 1 indicates, enclosed in broken outline, a safety circuit formed according to the present invention for the electrical control of a dc electric motor 2 operating, in a known way not illustrated, a window of a motor vehicle door. The supply terminals of this motor 2 are connected to respective central terminals 3 and 4 of a double switch 5 which is actuated by a coil of a relay 6. This switch 5 has a first pair 7 and 8 of change-over terminals which are connected to respective supply terminals 9 and 10 to which a dc supply voltage, such as a 12 volt supply, is conveniently applied. The double switch 5 further has a second pair of change-over terminals, 12 and 13, which are normally connected to the central terminals 3 and 4, in rest conditions of the relay 6, and are in turn connected to the central terminals 14 and 15 of a double switch 16 of known type for the control of the opening and closing respectively of the window. Such switch 16 has first change-over terminals 17 and 18 which are respectively connected to the supply terminals 9 and 10, and second change-over terminals 19 and 20 which are respectively connected to the supply terminals 10 and 9. The two movable contacts of the double switch 16 have an upper contact portion curved in opposite senses which, in the rest position, make contact with respective terminals 18 and 19 so as to form a short circuit with a braking function on the motor 2. In series with the connection to the supply terminal 10 in the safety circuit 1 there is disposed a calibrated resistor 21 the voltage across the terminals of which is taken off by connections 22 to the input of a threshold circuit 23 conveniently including differential amplifiers with temperature compensation, which is operable to provide an output signal 24 when the value of the input voltage between the connections 22 is greater than a predetermined value. This signal 24 arrives at the input of a comparison circuit 25 which constitutes a first part of a timer unit 26. At this comparison circuit 25 there also arrives a comparison signal 27 provided by a circuit 28 to which are supplied two signals 30 and 31 from two HALL effect sensors 32 and 33 respectively which detect the presence of the window in a predetermined region. Conveniently these two sensors 32 and 33 are disposed close to the positions where the window is completely open and completely closed, for example, 200 mm and 4 mm from the upper stop of the window, and the circuit 28 is operable to provide the comparison signal 27 when the window is located in positions lying between these two end regions in which the sensors 22 and 23 are positioned. In particular, for example, above the height of 200 mm from the upper stop the signal 30 is present, which determines the comparison signal 27, and this signal 27 remains present until the window rises above the height of 4 mm from the upper stop at which the signal 31 is also present, which blocks the signal 27. The timer unit 26 is connected to control the activation of the relay 6.

The function of the safety circuit of the present invention described above is as follows.

In conditions of normal use of the window winder, the user operates the double switch 16 in one sense or the other respectively to determine the connection of the terminals 17 and 18 or 19 and 20 to give rise to the supply of dc current in one direction sense or the other for the motor 2, and therefore control the opening or closing of the window. If during the closing of the window an obstacle to closure of the window itself becomes interposed and therefore exercises a force against the action of the motor 2, the current absorbed by the motor 2 increases and therefore the voltage applied by the connections 22 to the input of the threshold circuit 23 also increases. This circuit 23 can conveniently be calibrated in such a way as to provide the output signal 24 when the force resisting the closure of the window is equal to or greater than 10 kilograms. In these conditions, and if the window is in a position between the regions defined by the two sensors 32 and 33 so that the comparison signal 27 is present, the circuit 27 controls the timer unit 26 which therefore, for a time for example of 5 seconds, maintains the relay 6 activated so that the double switch 5 connects the central motor supply terminals 3 and 4 to the terminals 7 and 8 which are connected to the supply terminals 9 and 10 in such a way as to drive the motor 2 in a sense such as to lower the window. In this way, upon the occurrence of this force against the action of the motor 2 above the predetermined limit, the reversal of the movement of the motor 2 takes place and the window is completely opened, thereby eliminating all the disadvantages or risks connected with an erroneous or careless operation of the switch 16 to actuate the window winder.

The safety circuit 1 described is particularly useful in combination with timer circuits for supply of the motor 2 which drives the window for a predetermined time period after the key has been removed from an operable position in the associated ignition switch of the vehicle. In fact, in such circuits operation of the motor 2 takes place in a way which is no longer subjected to the direct control of the position of the key in the ignition switch of the vehicle, so that it cannot be stopped immediately by withdrawing such key; this possible disadvantage is therefore overcome with the realization of the present invention, which in the event of an obstacle to closure of the window being interposed automatically stops and reverses the movement of the window itself. In the drawing, there is therefore indicated, with the numeral 35, a timer unit, interposed between a pair of supply terminals 36 and 37 connected to the battery of the vehicle, and the supply terminals 9 and 10. A circuit 39 for automatic operation of the windows under pulse control, could on the other hand be conveniently disposed between the central terminals 14 and 15 of the double switch 16 and the terminals 12 and 13 of the switch 5. In particular, the circuit described, the subject of the present invention, can be applied to the various circuit configurations of the motor 2 described and illustrated by inserting the double switch 5 in the direct connection line to the motor driving the window winder and by inserting the resistor 21 in a connection traversed by the supply current to the motor operating the window downstream, naturally, of the timer circuit which operates the supply even in the absence of the key from the ignition switch of the vehicle.

Finally, it is clear that the described embodiments of the circuit of the present invention can be modified and varied without departing from the scope of the claims itself. Among other things, the sensors 32 and 33 can be varied, for example, by including magnetic contacts or displacement sensors.

**Claims**

1. A safety circuit (1) for the electrical control of a motor vehicle window actuator unit including means (21, 23, 26, 6, 5) operable to detect the value of the current consumed by the said window actuator unit, and to reverse the sense of operation of the said unit for values of the said current greater than a predetermined limit, the said means including a resistor (21) connected in series with the electrical supply circuit for the said window actuator unit, the voltage across the terminals of the said resistor (21) being applied to second means (23) operable to provide a first signal (24) for values of the said current greater than the predetermined limit, third means (26) connected to receive the said first signal (24) and operable to provide a control signal for reversing the sense of operation of the said unit, characterized by the fact that it includes timer means (35) for supplying the said actuator unit for a predetermined period of time after a key has been removed from an operative position in an associated ignition switch of the vehicle.

2. A circuit according to claim 1, characterized by the fact that the said second means (23) includes a temperature compensated threshold circuit.

3. A circuit according to claim 1 or 2, characterized by the fact that the said third means (26) includes a timer circuit operable to provide the said control signal for a predetermined time after the said first signal (24).

4. A circuit according to claim 3, characterized by the fact that the said third means (26) includes a comparison circuit (25) for the said first signal (24) as a function of predetermined window positions.

5. A circuit according to claim 4, characterized by the fact that the said comparison circuit (25) is connected to at least one window position sensor element (32, 33).

6. A circuit according to claim 5, characterized by the fact that the said sensor element (32, 33) is a HALL effect sensor or one having magnetic contacts or a displacement sensor.

7. A circuit according to claim 5 or Claim 6, characterized by the fact that it includes a pair (32, 33) of said sensor elements disposed respectively in proximity with the regions of complete opening and complete closure of the said window, connected to provide the comparison to the said comparison circuit (25) in the range of positions of the window lying between the said regions.

8. A circuit according to any preceding claim, characterized by the fact that the said control signal activates a relay (6) controlling the movement of a switch (5) disposed in the supply circuit for the said motor (2) towards connection terminals (7, 8) determining opening of the said window.

9. A circuit according to any preceding claim, characterized by the fact that the said actuator unit includes a DC electric motor (2).

10. A circuit according to any preceding claim, characterized by the fact that it includes automatic means (39) for actuation of the said window winder mechanism, the said means being activated by a pulse control.

## Patentansprüche

1. Sicherheitsschaltkreis (1) zur elektrischen Steuerung eines Fensterheberaggregates für Kraftfahrzeuge, welches Betätigungsmittel (21, 22, 26, 6, 5) aufweist um den Wert des Verbraucherstroms seitens des Fensterheberaggregates festzulegen und um den Drehsinn dieses Aggregates für Stromwerte umzukehren, die über einer vorgesehenen Grenze liegen, wo diese Mittel einen Resistor (21) enthalten der in Serie an den elektrischen Einspeisekreis dieses Fensterheberaggregates angeschlossen ist, wo die Steueranschlusspannung des Resistor (21) an zweite Mittel (23) angeschlossen ist, welche sich zur Abgabe eines ersten Signals (24) bei überschreiten des vorgesehenen Stromgrenzwertes einschalten, angeschlossene dritte Mittel (26) aufweisen um ein Steuersignal zur Umkehr der Betriebsrichtung dieses Aggregates abzugeben, dadurch gekennzeichnet dass dieses einen Zeitgeber (35) zur Speisung der Antriebsaggregate für eine vorgegebene Zeit aufweist, nach Herausziehen des Zündschlüssels aus seiner Einschaltstellung im Anlasschalter des Kraftfahrzeuges.

2. Schaltkreis nach Anspruch 1, dadurch gekennzeichnet dass das zweite Mittel (23) eine temperaturausgeglichene Schwellenwertschaltung aufweist.

3. Schaltkreis nach Anspruch 1 bzw. 2, dadurch gekennzeichnet dass das dritte Mittel (26) einen Zeitgeberschaltkreis aufweist, der einschaltbar ist um das Steuersignal für eine vorgegebene Zeitspanne nach dem ersten Signal (24) abzugeben.

4. Schaltkreis nach Anspruch 3, dadurch gekennzeichnet dass das dritte Mittel (26) einen Vergleichsschaltkreis (25) für das erste Signal (24) gegenüber vorgegebenen Stellungen des Seitenfensters aufweist.

5. Schaltkreis nach Anspruch 4, dadurch gekennzeichnet dass der Vergleichsschaltkreis (25) mindestens an ein Sensorenelement der Seitenfensterstellung (32, 33) angeschlossen ist.

6. Schaltkreis nach Anspruch 5, dadurch gekennzeichnet dass das Sensorenelement (32, 33) ein Sensor mit HALL-Effekt ist bzw. Magnetkontakte oder Verschiebungssensoren aufweist.

7. Schaltkreis nach Anspruch 5 oder 6, dadurch gekennzeichnet dass dieser ein Paar Sensorenelemente (32, 33) aufweist, welche sich in der Nähe der kompletten Offnungs- oder Schliesszone des Seitenfensters befinden und so angeschlossen sind, dass sie einen Vergleich für den Vergleichsschaltkreis (25) in den Seitenfensterstellungen innerhalb dieser Zone durchführen können.

8. Schaltkreis nach irgendeinem der vorhergehenden Ansprüche, dadurch gekennzeichnet dass das Steuersignal ein Relais (6) einschaltet, welches die Bewegung eines Schalters (5) steuert, der sich im Einspeisekreis des Motors (2) an den Steueranschlüssen (7, 8) befindet und das Offnen des Seitenfensters bewirkt.

9. Schaltkreis nach irgendeinem der vorhergehenden Ansprüche, dadurch gekennzeichnet dass das Antriebsaggregat einen GS-Motor besitzt.

10. Schaltkreis nach irgendeinem der vorhergehenden Ansprüche, dadurch gekennzeichnet dass dieser automatische Mittel (39) zum Antrieb der Fensterheber aufweist, wo diese Mittel von einer Impulssteuerung angetrieben werden.

## Revendications

1. Circuit de sécurité (1) pour la commande électrique d'un lève-vitre de véhicule à moteur, comprenant des moyens (21, 23, 26, 6, 5) servant à détecter la valeur du courant consommé par ledit lève-vitre et pour inverser le sens de fonctionnement de ce lève-vitre lorsque le courant est supérieur à une limite prédéterminée, ces moyens comprenant une résistance (21) montée en série avec le circuit d'alimentation en courant électrique du lève-vitre, la tension aux bornes de cette résistance (21) étant appliquée à des deuxièmes moyens (23) servant à procurer un premier signal (24) lorsque le courant a une valeur supérieure à la limite prédéterminée, des troisièmes moyens (26) montés pour recevoir le premier signal (24) et servant à procurer un signal de commande pour inverser le sens de fonctionnement du lève-vitre, caractérisé en ce qu'il comporte des moyens de temporisation (35) pour alimenter ce lève-vitre pendant un temps prédéterminé après l'enlèvement d'une clé d'une position active dans un commutateur d'allumage associé du véhicule.

2. Circuit selon la revendication 1, caractérisé en ce que les deuxièmes moyens (23) comportent un circuit de seuil à compensation de température.

3. Circuit selon la revendication 1 ou la revendication 2, caractérisé en ce que les troisièmes moyens (26) comportent un circuit de temporisation servant à procurer le signal de commande pendant un temps prédéterminé après le premier signal (24).

4. Circuit selon la revendication 3, caractérisé en ce que les troisièmes moyens (26) comportent un circuit de comparaison (25) pour le premier signal (24) en fonction de positions prédéterminées de la vitre.

5. Circuit selon la revendication 4, caractérisé en ce que le circuit de comparaison (25) est raccordé à au moins deux capteurs de position de la vitre (32, 33).

6. Circuit selon la revendication 5, caractérisé en ce que le capteur (32, 33) est un capteur à effet HALL, ou un capteur ayant des contacts magnétiques, ou un capteur de déplacement.

7. Circuit selon la revendication 5 ou la revendication 6, caractérisé en ce qu'il comporte deux capteurs (32, 33) disposés respectivement à proximité des régions d'ouverture complète et de fermeture complète de la vitre, montés pour procurer la comparaison au circuit de comparaison (25) dans la plage des positions de la fenêtre située entre les deux régions extrêmes.

8. Circuit selon l'une quelconque des revendications précédentes, caractérisé en ce que le signal de commande excite un relais (6) commandant le mouvement d'un commutateur (5) disposé dans le circuit d'alimentation du moteur (2) en direction de bornes de raccordement (7, 8) déterminant l'ouverture de la vitre.

9. Circuit selon l'une quelconque des revendications précédentes, caractérisé en ce que le lève-vitre comporte un moteur électrique à courant continu (2).

10. Circuit selon l'une quelconque des revendications précédentes, caractérisé en ce qu'il comporte des moyens automatiques (39) pour l'actionnement du mécanisme de lève-vitre, ces moyens étant actionnés par une impulsion de commande.